# EUROPEAN PATENT SPECIFICATION

(11) **EP 2 741 229 B1**
(45) Date of publication and mention of the grant of the patent: **17.10.2018**
(21) Application number: 13195882.9
(22) Date of filing: 05.12.2013
(51) Int. Cl.: G06F 21/74, G06F 21/83, G06F 9/48, G06F 21/62, G06F 9/46

(54) **Priority-based application execution method and apparatus of a dual-mode data processing device**
Prioritätsbasiertes Anwendungsausführungsverfahren und -gerät für eine Doppelmodus-Datenverarbeitungsvorrichtung
Procédé et appareil pour l'exécution d'application selon la priorité dans un dispositif de traitement de données à double modes

(30) Priority: 07.12.2012 US 201261734545 P; 26.02.2013 KR 20130020209
(43) Date of publication of application: 11.06.2014
(73) Proprietor: Samsung Electronics Co., Ltd., Gyeonggi-do 443-742 (KR)
(72) Inventor: Kwag, Kyungsoo, Gyeonggi-do 443-742 (KR); Ryu, Jaemin, Gyeonggi-do 443-742 (KR); Lee, Jungkyuen, Gyeonggi-do 443-742 (KR); Jung, Kyungim, Gyeonggi-do 443-742 (KR); Choi, Hyunjin, Gyeonggi-do 443-742 (KR)
(74) Representative: HGF Limited

(56) References cited:
- EP-A2- 2 124 165
- WO-A2-2008/086456
- US-A1- 2004 139 346

## Description

### TECHNICAL FIELD

Certain embodiments of the present invention provide a method, system and/or apparatus for executing an application in a priority order in a data processing device. More particularly, although not exclusively, certain embodiments of the present invention provide a method, system and/or apparatus for executing applications in a highest-priority-first order in a processor divided into a secure mode area and a non-secure mode area.

### BACKGROUND

Typically, a data processing device includes a processor configured to execute loaded applications under the control of an Operating System (OS). In a case where a specific application is executed by the processor, it is desirable to increase security of the resource of the data processing device in association with the specific application.

For example, in a case of applications needing a security key to perform validation, authentication, and decryption processes, the data processed using an input security key is typically stored in a secure region of memory so as to be protected from unauthorized access, for example by malware, such as a hacking application. Furthermore, in order to prevent the security key from being compromised during the key input process, for example by a hooking attack when operating the input means, such as a keypad, the keypad may be operated in a secure mode.

As an example of technique for increasing resource security, a TrustZone architecture of ARM secures a hardware resource using a processor supporting a non-secure mode domain (normal world) and a secure mode domain (secure world). For example, the non-secure mode domain and the secure mode domain are typically separated in hardware so as to reinforce security.

For example, legacy OSs (such as Linux, Android, and iOS) are typically operated in the non-secure mode domain and the framework and applications are typically operated under the control of the OS. Since the non-secure domain is vulnerable, for example to malware attacks, it is risky to perform highly security-sensitive operations.

On the other hand, in the secure mode domain, legacy OSs and framework operations are typically restricted and separated from the non-secure mode domain in hardware so as to reduce security problems, for example caused by malware programs. In the secure mode domain, it is possible to use the resource of a System On Chip (SoC) and other hardware resources. Furthermore, by configuring the permission level of a resource to 'secure' in response to a certain application, it becomes difficult to access and use that resource, although there is a request from an application in the non-secure mode domain.

Accordingly, when an application attempts to access a resource for performing an urgent process in the non-secure mode domain in the state that the resource permission level is set to 'secure' in the secure mode domain, it is difficult to access or use that resource, as far as the permission level to the resource is not changed.

Therefore, what is desired are a method, system and/or apparatus for allowing a non-secure mode domain to use a resource of a secure mode domain in response to an application with high priority in a data processing device utilizing a process scheme or architecture providing the secure mode domain and the non-secure mode domain.

US 2004/139346 A1 describes a technique for exception handling control in a secure processing system. WO 2008/086456 A2 describes a technique for preemptive masking and unmasking of non-secure processor interrupts. EP 2124165 A2 describes a microprocessor having a secure execution mode with provisions for monitoring, indication, and managing security levels.

The above information is presented as background information only to assist with an understanding of the present disclosure. No determination has been made, and no assertion is made, as to whether any of the above might be applicable as prior art with regard to the present invention.

### SUMMARY

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a method, system, and/or apparatus for allowing a non-secure mode domain to use a resource of the secure mode domain in response to an application with high priority in a data processing device utilizing a process, scheme or architecture providing the secure mode domain and the non-secure mode domain.

In accordance with an aspect of the present invention, there is provided a method for executing an application with a processor supporting a secure mode domain and a non-secure mode domain, the method comprising the steps of: receiving a request to be processed in the non-secure mode domain from the application; determining an access permission level configured to a resource used for processing the request; determining, when the access permission level allows for access from the secure mode domain, a priority of the application; changing the access permission level to allow for access by the non-secure mode domain if the priority of the application is a high priority, wherein a high priority application is an application that is needed to be processed within a period shorter than a certain threshold; and processing the request of the application using the resource in the non-secure mode domain.

In accordance with another aspect of the present invention, there is provided an apparatus for executing an application with a processor supporting a secure mode domain and a non-secure mode domain, the apparatus comprising: a non-secure mode controller configured to receive a request to be processed in the non-secure mode domain from the application, and process, when an access permission level allows for access from the secure mode domain and an access permission response is received in response to a request for access to a resource, the request of the application using the resource in the non-secure mode domain; and a mode switching controller configured to determine, when the access permission level allows for access from the secure mode domain, a priority of the application, change the access permission level to allow for access by the non-secure mode domain if the priority of the application is a high priority, wherein a high priority application is an application that is needed to be processed within a period shorter than a certain threshold, and transmit the access permission response to the non-secure mode controller.

Exemplary embodiments of the present invention provide a computer program comprising instructions arranged, when executed, to implement a method, system and/or apparatus, in accordance with any one of the above-described aspects. Exemplary embodiments of the present invention provide a machine-readable storage storing such a program.

Other aspects, advantages, and salient features of the present invention will become apparent to those skilled in the art from the following detailed description, which, taken in conjunction with the annexed drawings, discloses various exemplary embodiments of the present invention.

### BRIEF DESCRIPTION OF THE DRAWINGS

The above and other aspects, and features and advantages of certain exemplary embodiments and aspects of the present invention will be more apparent from the following description taken in conjunction with the accompanying drawings, in which:
FIG. 1 is a block diagram illustrating a hardware configuration of a TrustZone provided by an ARM based processor according to an exemplary embodiment of the present invention;
FIG. 2 is a block diagram illustrating a configuration of an application execution apparatus according to an exemplary embodiment of the present invention;
FIG. 3 is a signal flow diagram illustrating a procedure of processing a request of a security application in a state where no high priority application is running in an application execution method according to an exemplary embodiment of the present invention;
FIG. 4 is a diagram illustrating a screen display of a touch keypad User Interface (UI) for receiving key input in a secure mode according to an exemplary embodiment of the present invention;
FIG. 5 is a signal flow diagram illustrating a procedure of processing a request of a high priority application with suspension of the request of a security application in an application execution method according to an exemplary embodiment of the present invention;
FIG. 6 is a diagram illustrating a screen display of a UI wherein a high priority application is executed in a state of processing a request of a security application in an application execution method according to an exemplary embodiment of the present invention;
FIG. 7 is a signal flow diagram illustrating a procedure of processing a request of a high priority application with cancellation of the request of a security application in an application execution method according to an exemplary embodiment of the present invention; and
FIG. 8 is a diagram illustrating a screen display of a UI, wherein a high priority application is executed in a state of processing a request of a security application in an application execution method according to an exemplary embodiment of the present invention.

The same or similar reference numerals may be used to represent the same or similar elements throughout the drawings

### DETAILED DESCRIPTION

The following description of exemplary embodiments of the present invention, with reference to the accompanying drawings, is provided to assist in a comprehensive understanding of the present invention, as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present invention.

Descriptions of well-known functions, processes, structures and constructions may be omitted for clarity and conciseness, and to avoid obscuring the subject matter of the present invention.

The terms and words used in the following description and claims are not limited to the bibliographical meanings, but, are merely used to enable a clear and consistent understanding of the present invention. Accordingly, it should be apparent to those skilled in the art that the following description of various exemplary embodiments of the present invention is provided for illustration purpose only and not for the purpose of limiting the present invention, as defined by the appended claims.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, it is to be understood that the singular forms "a," "an," and "the" include plural referents unless the context dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Although the exemplary embodiments described in the following description are implemented in the form of a mobile terminal, for example a tablet, Personal Computer (PC), or a smartphone equipped with an ARM based processor, those skilled in the art will appreciate that embodiments of the present invention may be implemented in any suitable form, for example in the form of any other type of terminal implemented with similar or equivalent technology, and/or with various modifications and changes.

A secure world (or secure mode domain), and a normal (non-secure) world (or non-secure mode domain), according to exemplary embodiments of the present invention are described as follows.

Embodiments of the present invention utilize computing resources. The skilled person will appreciate that computing resources encompass a wide variety of entities. For example, computing resources may include (i) hardware in the form of, for example, input units, output units, processors, Application Specific Integrated Circuit (ASIC) modules, memory/storage units, peripheral devices, interrupt lines, signal paths, data/address/control buses, and the like; (ii) software and/or firmware in the form of, for example operating systems, application programs, virtual machines (e.g. virtual processors), and the like; and (iii) other resources such as stored data and/or files.

In the description and claims of the present specification, a "world" or "domain" refers to a certain operating environment/mode/state/domain involving a certain set of computing resources. Furthermore, a "secure world" (or "secure mode domain") and a "non-secure world" (or "non-secure mode domain") refer to respective operating domains differing in the level of protection given to computing resources implementing those operating domains. Here, "protection" means protection from hacking (for example in the form of unauthorized access and/or modification and/or manipulation of the computing resources) by one or more security features.

For example, a "secure world" (or "secure mode domain") may refer to an operating domain involving certain computing resources having a first level of protection (e.g. at least some of the computing resources are protected by one or more security features). On the other hand a "non-secure world" (or "non-secure mode domain") may refer to an operating domain involving certain computing resources having a second level of protection (e.g. fewer or none of the computing resources are protected by security features), where the first level of protection is higher than the second level of protection.

The skilled person will appreciate that there are numerous security features that may be used to protect computing resources from hacking, for example in the form of unauthorized access and/or modification and/or manipulation of the computing resources. For example, security features may include: encryption, authentication and/or verification schemes; mechanisms for isolating (physically and/or logically) components using hardware and/or software; storage of software and/or firmware and/or data and/or files in regions of protected memory or unmodifiable memory (for example a ROM or one-time programmable memory); execution of processors and other components in a secure mode; masking of interrupt lines and other inter-component signaling; and the like.

The skilled person will appreciate that different computing resources may be used in a secure world and a non-secure world, and that a specific computing resource may be used in both the secure world and the non-secure world, for example by switching between a secure mode and an non-secure mode, or by partitioning a specific computing resource (e.g. memory or processor resource) into secure and non-secure parts. The skilled person will also appreciate that an overall system may include both a secure world and a non-secure world at the same time.

In an exemplary secure world (similar to a secure state or a secure domain), secure application programs are executed on top of a secure operating system. Secure application programs access secure data. Secure application programs are stored in a secure storage unit isolated by hardware and software mechanisms. As the capacity of the secure storage unit may be limited, for example by system design, a secure application program may be designed to have a small size, for example by supporting only essential functions. Secure data may include information stored in the secure world and secured signals generated by peripheral devices.

In an exemplary non-secure (normal) world, a non-secure operating system and non-secure application programs are provided. The non-secure operating system is a regular operating system supporting overall operations of a mobile terminal or other device, and a non-secure application program is an ordinary application program. A non-secure application program running in the non-secure world may be prevented from, or restricted in, accessing secure data. In particular, when a hacking program is executed in the non-secure world, the hacking program cannot access secure data or a process working in the secure world.

The secure world and the non-secure world may be supported, for example, by a secure processing architecture, for example based on TrustZone Technology of ARM Holdings. The skilled person will appreciate that any other suitable technology may be used in embodiments of the present invention. In certain embodiments of the present invention, security utilizing both the secure world and the non-secure world may be provided.

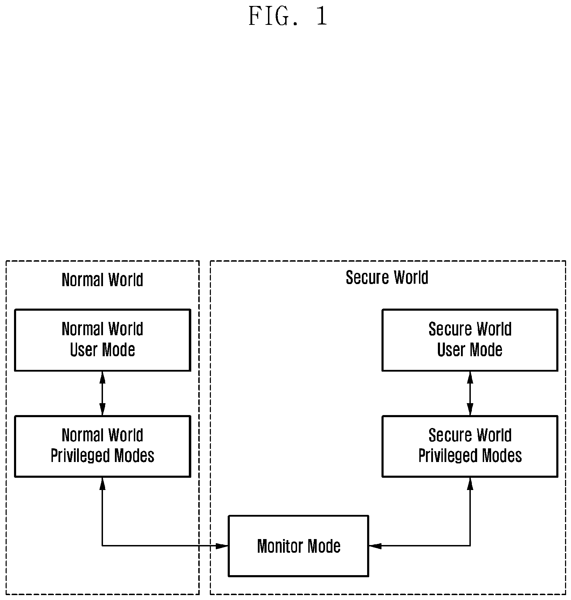

FIG. 1 is a block diagram schematically illustrating a hardware configuration of a TrustZone provided by an ARM based processor according to an exemplary embodiment of the present invention. The TrustZone system divides some or all hardware and software resources into a normal world as the non-secure mode domain and a secure world as the secure mode domain to achieve security.

Referring to FIG. 1, the normal world includes a normal world user mode and a normal world privileged mode, and the secure world includes a secure world user mode and a secure world privileged modes. Additionally, a monitor mode is configured to switch between two virtual processors.

In certain exemplary embodiments, an application execution method and apparatus is applicable to the processor operating in the secure and non-secure mode domains separately, for example like TrustZone.

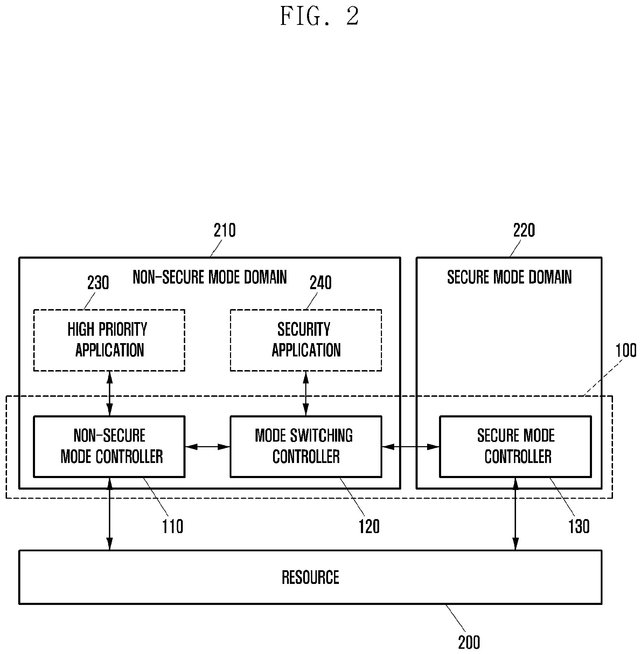

FIG. 2 is a block diagram illustrating a configuration of an application execution apparatus according to an exemplary embodiment of the present invention.

Referring to FIG. 2, an application execution apparatus 100 includes a non-secure mode controller 110, a mode switching controller 120, and a secure mode controller 130. These components may be implemented, for example, in the form of a recording medium for storing the software executable by the processor structured as shown in FIG. 1. Alternatively, one or more, or all of these components may be implemented in the form of hardware, or any combination of hardware and software.

The non-security mode controller 110 operates in a non-security mode domain 210 of the processor and accesses a resource 200 to process the request of a first application (e.g. a high priority application 230) which is not security-sensitive but needed to be processed urgently, for example in as short a time as possible, or within a period shorter than a certain threshold.

Although not shown in FIG. 2, the non-secure mode controller 110 operates in the non-secure mode and processes the request of a second application (e.g. a low priority application, or a low priority normal application). The request of the normal application is not processed until the resource occupied by the high priority application 230 or a security application 240 is released. In certain exemplary embodiments, the high priority application 230 may have a first priority and the low priority application may have a second priority, where the first priority is higher than the second priority.

The mode switching controller 120 operates in the non-secure mode domain 210 of the processor between the non-secure mode controller 110 executing applications in the non-secure mode and the secure mode controller 130 executing applications in the secure mode. The mode switching controller 120 also transfers the request of the secure application 240 for processing in a secure state to the secure mode controller 130 such that the secure mode controller 130 accesses the resource 200 to process the request.

The secure mode controller 130 processes the request of the secure application which is transferred by the mode switching controller 120 and changes the access permission level of the resource 200. The access permission level of the resource for use in execution of the application is initialized to the level accessible from the non-secure mode domain 210. Accordingly, in order for the secure mode controller 130 to process the request of the security application 240, it is necessary for the secure mode controller 130 to change the access permission level to the level allowing for access from a secure mode domain 220.

The secure mode controller 130 changes the access permission level of the resource 200 to a level allowing for access from the secure mode domain 220 and another level allowing for access from the non-secure mode region 210 as an initial state. The secure mode controller 130 notifies the mode switching controller 120 of the change result, and the mode switching controller 120 notifies the non-secure mode controller 110 of the change result to inform the non-secure mode controller 110 that the resource can be used for processing the application running in the non-secure mode.

A description is made of an exemplary embodiment of the procedure of executing the high priority application needing access to the resource occupied by another application (e.g. the security application 240).

Suppose a situation where an incoming call is received in a state where a financial transaction application is running on a smartphone with the use of an input means or input unit, for example a touch keypad, for receiving a password and an authentication number, such that the telephony application as the high priority application 230 is executed with the necessity of access to the input means for receiving a command for accepting or rejecting the incoming call. The skilled person will appreciate that embodiments of the present invention are not limited to this specific example.

In methods of the related art, although it is necessary to input a command through the input means for accepting or rejecting the incoming call, the telephony-related input is typically not transferred to the telephony application because the input means is preoccupied by the security application 240. Certain embodiments of the present invention provide a method for processing the security application 240 with priority by reflecting its high priority and need for urgent processing, although the telephone application does not need to be processed in the secure mode.

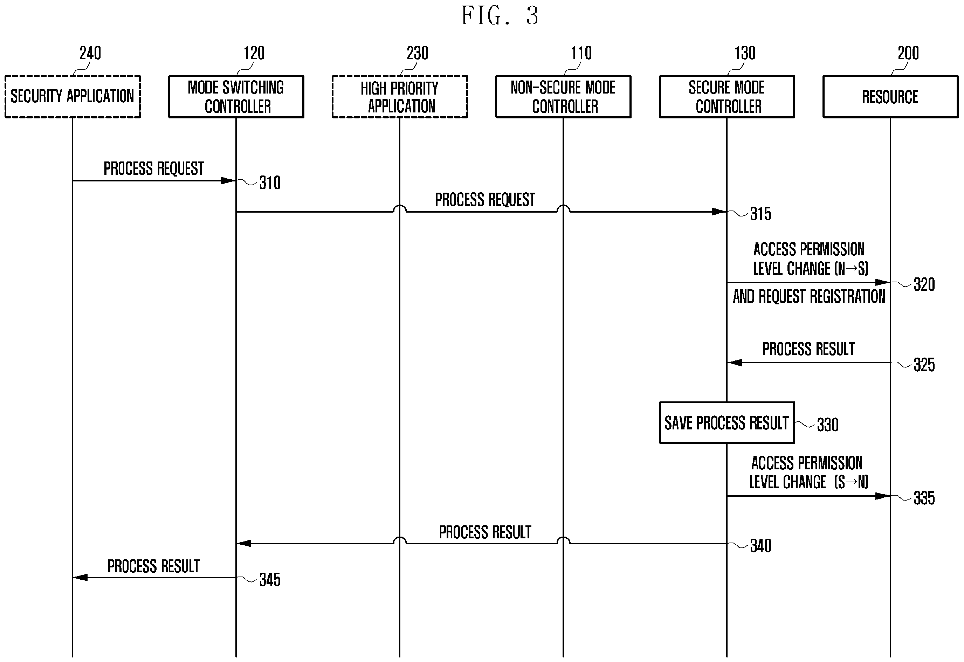

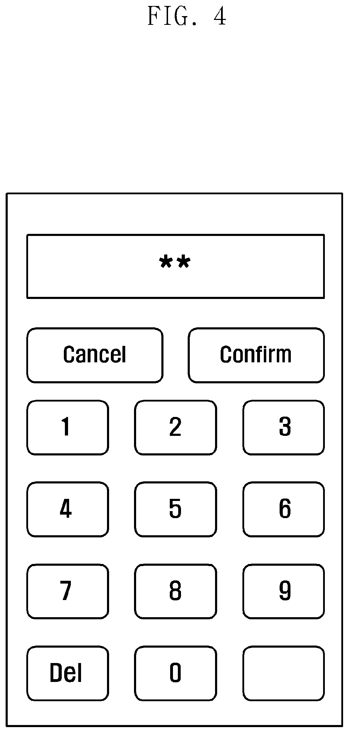

FIG. 3 is a signal flow diagram illustrating a procedure of processing a request of a security application in a state where no high priority application is running in an application execution method according to an exemplary embodiment of the present invention. FIG. 4 is a diagram illustrating a screen display of a touch keypad User Interface (UI) for receiving key input in a secure mode according to an exemplary embodiment of the present invention.

Referring to FIGS. 3 and 4, the mode switching controller 120 receives a process request of the security application at operation 310 and sends the process request to the secure mode controller 130 at operation 315.

If the resource 200 used for executing the security application 240 is a touch input means, the process request of the security application 240 may include the type of needed input, e.g., a position of a key input, a drag path, a number of touch inputs, and the like.

Since the request of the security application 240 has to be processed in the secure mode, the secure mode controller 130 changes the access permission level of the resource to be used for execution of the security application 240 from the non-secure mode (N) to the secure mode (S) and registers the process request of the security application 240 with the resource 200 at operation 320. In certain exemplary embodiments of the present invention, the secure mode controller 130 may configure the position information on the keys of the input means, as shown in FIG. 4, in itself or receive the key position information from the security application 240 when registering the process request with the resource 200.

The secure mode controller 130 receives the process result of the resource 200 at operation 325 and stores the process result at operation 330. If the resource 200 is the touch keypad as shown in FIG. 4, the process result from the resource 200 may include a touch position, a time between touch start and end times, and a difference between the touch start and end points. The process result is stored in the secure region of the memory so as to be protected, for example from other applications running in the non-secure mode or a malware attack.

Once the process for processing the request of the security application 240 has completed, the secure mode controller 130 changes the access permission level of the resource 200 to the non-secure mode accessible level (N) at operation 335 and notifies the mode switching controller 120 that the request of the security application 240 has been processed at operation 340.

In a case where the process request received from the security application 240 at operation 310 is made through a plurality of touch inputs, the process of operations 315 to 340 corresponds to a process for processing a one touch input. If there is any request of the security application 240 to be processed after the receipt of the process result from the secure mode controller 130, the mode switching controller 120 resends the secure mode controller 130 the process request to perform operations 315 to 340 again. If it is determined that all the requests of the security application have been processed, the mode switching controller 120 sends the process result to the security application 240 at operation 345.

If the high priority application 230 is executed to generate a process request before the process of the security application 240 of FIG. 3 is completed, the legacy non-secure mode controller 110 is restricted an access to the resource 200 so as to wait until the process of the security application is processed completely or the request of the high priority application 230 is cancelled. In certain exemplary embodiments of the present invention, the process of the security application 240 is suspended to process the high priority application 230 by taking notice that the process of the high priority application 230 is urgent.

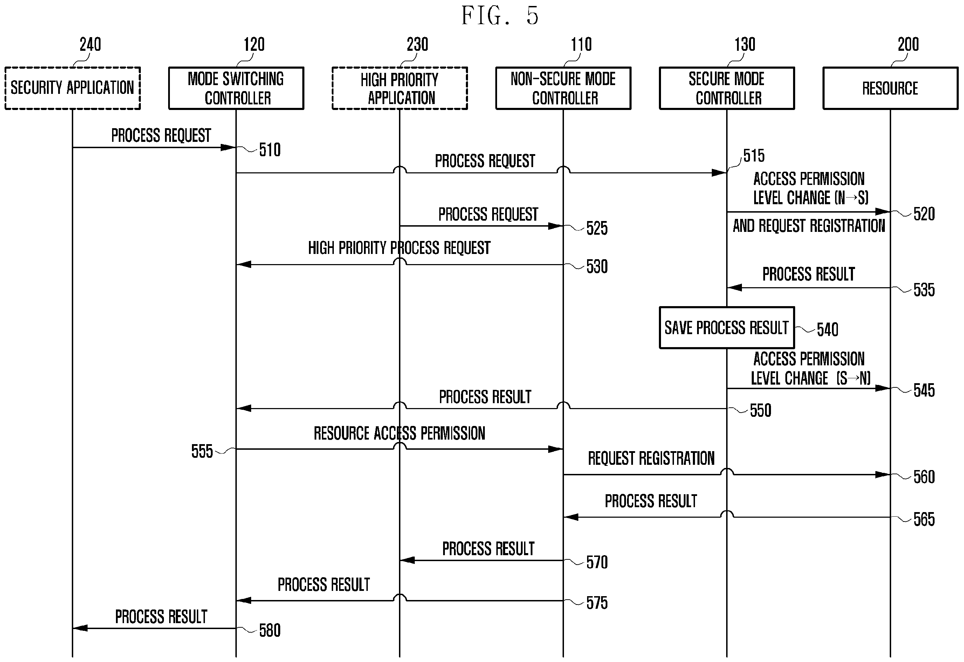

FIG. 5 is a signal flow diagram illustrating a procedure of processing a request of a high priority application with suspension of the request of a security application in an application execution method according to an exemplary embodiment of the present invention.

Referring to FIG. 5, the mode switching controller 120 receives the process request of the security application 240 at operation 510 and forwards the process request to the secure mode controller 130 at operation 515. The secure mode controller 130 changes the access permission level of the resource 200 from the non-secure mode (N) to the secure mode (S) and registers the request of the security application 240 at operation 520.

The non-secure mode controller 110 receives the process request from the high priority application 230 at operation 525. The non-secure mode controller 110 determines that the access permission level of the resource 200 to be used for processing the request is the level accessible in the secure mode and sends the process request of the high priority application 230 to the mode switching controller 120 at operation 530. However, if the success permission level of the resource 200 is the level accessible in the non-secure mode (N), the non-secure mode controller 110 may access the resource 200 to process the request without sending the process request to the mode switching controller 120.

Since the secure mode controller 130 is processing the request of the security application 240 at the level accessible in the secure mode (S), the mode switching controller 120 waits until the process is complete and the process result is received.

The secure mode controller 130 receives the process result from the resource 200 at operation 535, stores the process result at operation 540, and changes the access permission level to the level accessible in the non-secure mode (N) back at operation 545. Since the procedure of processing the request of the secure application 240 has been described with reference to the embodiment of FIG. 3, a description thereon is omitted here.

Thereafter, the secure mode controller 130 sends the mode switching controller 120 the process result of the secure mode application 240 at operation 550, the mode switching controller 120 notifies the non-secure mode controller 110 that the resource 200 is accessible to process the request of the high priority application since the access permission level of the resource 200 has been changed to the level accessible in the non-secure mode (N) at operation 555.

At this time, the mode switching controller 120 may determine the priority of the application generating the process request and, if the application is the high priority application 230, the mode switching controller 120 sends a response to permit the non-secure mode controller 110 to access the resource 200. However, if the application generating the request is a general application with a normal priority, the mode switching controller 120 ignores the request from the non-secure mode controller 110 to prevent the non-secure mode controller 110 from accessing the resource 200 until the request of the security application 240 is processed completely.

The mode switching controller 120 may send the non-secure mode controller 110 an access permission response to process the request of the high priority application 230.

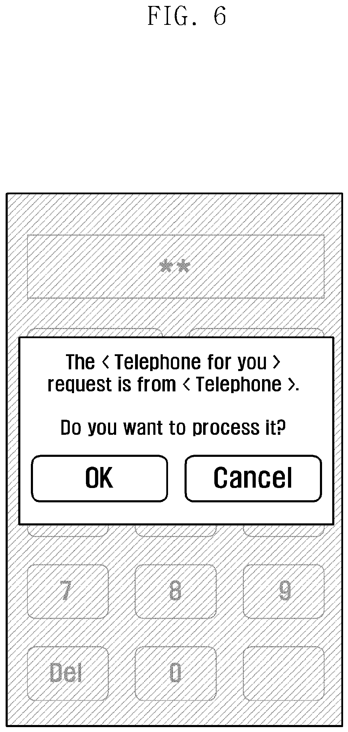

FIG. 6 is a diagram illustrating a screen display of a UI wherein a high priority application is executed in a state of processing a request of a security application in an application execution method according to an exemplary embodiment of the present invention.

Referring to FIG. 6, if a telephony application needed to be processed urgently in the middle of receiving a user's touch input by means of a touch keypad presented on the screen as shown in FIG. 4, a dialog box is presented to notify of an incoming call so as to prompt the user to determine whether to accept the incoming call or continue processing the request of the high priority application 230.

If the UE selects 'OK' button on the dialog box, the mode switching controller 120 sends the non-secure mode controller 110 an access permission response for the resource 200 to receive the incoming call. Otherwise, if the user selects the 'cancel' button, the mode switching controller 120 ignores the process request in spite of the high priority of the telephony application such that the secure mode controller 130 continues processing the request of the security application 240.

Referring back to FIG. 5, if the permission response is received from the mode switching controller 120, the non-security mode controller 110 accesses the resource 200 to register the process request of the high priority application 230 at operation 560. If the resource 200 is a touch input means and if the process request is an incoming call accept/reject prompt, the non-secure mode controller 110 may prompt the user to determine whether to accept or reject the incoming call in registering the process request with the resource 200. The non-secure mode controller 110 may also register the touch position corresponding to an incoming call accept or reject command.

Thereafter, the process result on the request of the high priority application 230 is received from the resource 200 at operation 565, and the non-secure mode controller 110 sends the high priority application 230 and the mode switching controller 120 the process result at operations 570 and 575, respectively.

Upon receipt of the process result, if there is any request of the security application 240 to be processed, the mode switching controller 120 sends the secure mode controller 130 the process request to continue processing. Otherwise, if the process has completed, the mode switching controller 120 sends the security application 240 the process result at operation 580.

In a case where the process request received form the security application 240 needs a number of plural accesses to the resource 200, the mode switching controller 120 may permit the non-secure mode controller 110 to access the resource 200 after the requests of the security application 240 are processed completely at operation 555 or send the non-secure mode controller 110 the permission response after current access and use of the resource 200 are terminated.

For example, if the process request received form the security application 240 is the a 4-digit password input through the touch keypad as shown in FIG. 4, the mode switching controller 120 transfers the processing request four times for receiving the four digits independently as operation 515, and the secure mode controller 130 accesses the resource 200, i.e., touch keypad, 4 times to process the request of the security application completely.

If a process request of the high priority application 230 is generated in the state where the four-digit password input processing request is received from the security application, the mode switching controller 120 sends the secure mode controller 130 the process requests for respective digits of the password subsequently to receive the password and, if the password is received completely, sends the non-secure mode controller 110 the permission response.

However, by taking account of the urgency of the process of the high priority application, if the request to the security mode controller 130 is processed completely, the mode switching controller 120 may send the permission response to the non-secure mode controller 110 regardless of the presence of a residual or other request to be processed, i.e., whether residual access times to the resource remain. Accordingly, the user may accept or reject an incoming call occurring in the middle of entering a password through the touch keypad for the financial transaction and resume the input of the password.

Whether to perform access to the resource several times for processing the request of the security application 240 entirely may be preconfigured in advance or reconfigured by the user.

In certain exemplary embodiments of the present invention, if a request of the high priority application 230 is generated in the state of processing the request of the security application 240, the mode switching controller 120 may cancel the process of the security application 240 and start processing the request of the high priority application immediately.

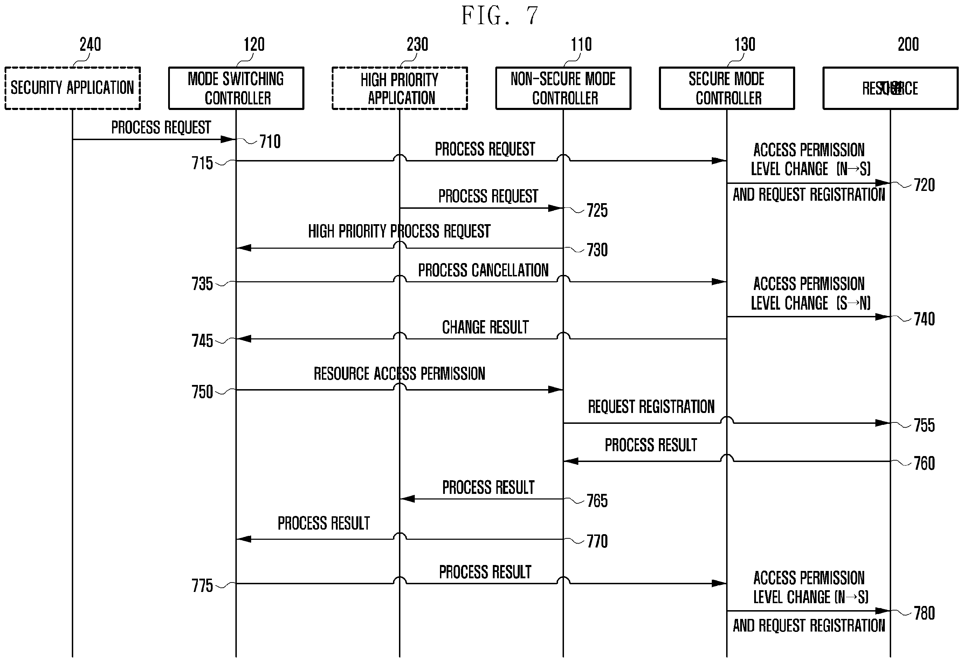

FIG. 7 is a signal flow diagram illustrating a procedure of processing a request of a high priority application with cancellation of the request of a security application in an application execution method according to an exemplary embodiment of the present invention.

Referring to FIG. 7, the mode switching controller 120 receives a process request from the security application 240 at operation 710 and sends the process request to the secure mode controller at operation 715. The secure mode controller 130 changes the access permission level from the non-secure mode (N) to the secure mode (S) and registers the process request of the security application 240 at operation 720.

At this time, if a process request of the high priority application is received at operation 725, the non-secure mode controller 110 determines that the resource 200 is occupied by the secure mode controller 130 and sends the mode switching controller 120 a high priority process request to the mode switching controller 120 at operation 730.

Thereafter, the mode switching controller 120 sends the secure mode controller 130 a cancel command to cancel the request of the security application 240 at operation 735. At this time, the mode switching controller 120 may determine whether the previously received process request has been transmitted by the high priority application 230 before transmitting the cancel command. If the request has been transmitted by a normal low priority application, the mode switching controller 120 skips transmitting the cancel command and ignores the request from the normal application.

The secure mode controller 130 cancels the process request of the security application 240 which has been registered with the resource 200 and changes the access permission level of the resource 200 from the secure mode (S) to the non-secure mode (N) at operation 740. Thereafter, the secure mode controller 130 sends the mode switching controller 120 the change result at operation 745, and the mode switching controller 120 sends the non-secure mode controller 110 the access permission response at operation 750.

The non-secure mode controller 110 accesses the resource 200 to register the process request of the high priority application at operation 755 and receives the process result of the resource 200 at operation 760. Thereafter, the non-secure mode controller 110 sends the high priority application 230 and the mode switching controller 120 the process result at operation 765 and 770, respectively.

Since the process request of the security application 240 has been cancelled, the mode switching controller 120 sends the secure mode controller 130 the process result at operation 775, and the secure mode controller 130 changes the access permission level of the resource 200 from the non-secure mode (N) to the secure mode (S) and registers the process request at operation 780. A procedure of processing the request of the security application 240 is identical with the procedure described above.

In a case of canceling the process request of the security application 240 and processing the request of the high priority application 230, the user may select whether to process the request of the high priority application 230.

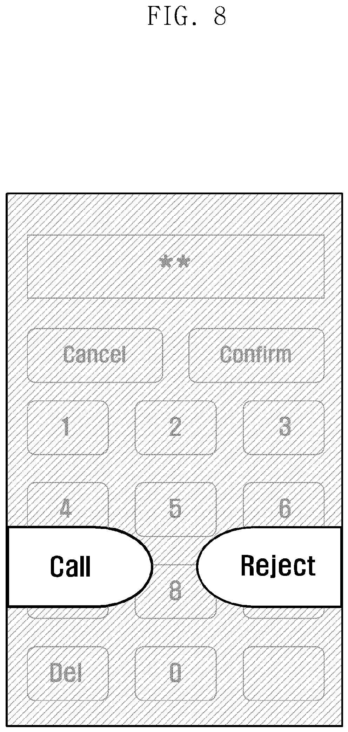

FIG. 8 is a diagram illustrating a screen display of a UI wherein a high priority application is executed in a state of processing a request of a security application in an application execution method according to an exemplary embodiment of the present invention.

Referring to FIG. 8, if an incoming call is received in the middle of inputting a password for executing the security application 240, a selection button is presented on the keypad screen to prompt the user to input a selection command for determining whether to process the request of the high priority application 230.

If the user selects a 'call' button, the secure mode controller 130 cancels the process request of the security application 240 and processes the request of the high priority application 230, i.e., request for accepting the incoming call. In this case, the keypad may disappear on the screen to process the request of the security application 230.

Otherwise, if the user selects a 'reject' button, the mode switching controller 120 ignores the request of the high priority application 230 and does not transmit any cancel command such that the secure mode controller 130 continues processing the request of the security application 240.

The skilled person will appreciate that embodiments of the present invention are not limited to the specific examples disclosed herein, for example those illustrated in Figures 4, 6 and 8.

In certain exemplary embodiments, in a case of using the resource 200 to process the secure mode in the secure mode domain 220 of the processor, it is possible to improve the user's convenience while maintaining application execution security by processing the high priority application running in the non-secure mode with priority.

It will be appreciated that embodiments of the present invention can be realized in the form of hardware, software, or any combination of hardware and software. Any such software may be stored in the form of volatile or non-volatile storage, whether erasable or rewritable or not, for example a storage device, ROM, RAM, memory chips, device or integrated circuits, or an optically or magnetically readable medium, for example a CD, DVD, magnetic disk or magnetic tape, or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing an apparatus, system or method as claimed in any one of the claims of this specification, and a machine-readable storage storing such a program. Still further, such programs may be conveyed electronically via any medium, for example a communication signal carried over a wired or wireless connection, and embodiments of the present invention suitably encompass the same.

While the present invention has been shown and described with reference to various exemplary embodiments thereof, it will be understood by those skilled in the art that various changes in form and details may be made therein without departing from the scope of the present invention, as defined by the appended claims.

## Claims

1. A method for executing an application (230) with a processor supporting a secure mode domain (220) and a non-secure mode domain (210), the method comprising the steps of:
receiving (525, 725) a request to be processed in the non-secure mode domain (210) from the application (230);
determining (530, 730) an access permission level configured to a resource (200) used for processing the request;
determining, when the access permission level allows for access only from the secure
mode domain (220), a priority of the application (230);
changing (545, 740) the access permission level to allow for access by the non-secure mode domain (210) if the priority of the application (230) is a high priority, wherein a high priority application is an application that is needed to be processed within a period shorter than a certain threshold; and
processing (560, 565, 755, 760) the request of the application (230) using the resource (200) in the non-secure mode domain (210).

2. The method of claim 1, wherein the step of changing (545) the access permission level comprises the steps of:
waiting, when the resource (200) is occupied by the secure mode domain (220), until resource occupancy of the secure mode domain (220) is released; and
changing the access permission level (545).

3. The method of claim 2, wherein the step of changing (545) the access permission level comprises the step of changing, when a security application (240) needing use of the resource (200) plural times is executed, the access permission level of the resource (200) independent of a number of times of use remaining.

4. The method of claim 1, 2 or 3, wherein the step of changing (545) the access permission level comprises changing, when a security application (240) needing use of the resource (200) plural times is executed, the access permission level of the resource (200) after the resource (200) is used plural times by the secure mode domain (220).

5. The method of any preceding claim, wherein the step of changing (740) the access permission level comprises the steps of:
cancelling (735), when the resource (200) is occupied by the secure mode domain (220), resource occupancy of the secure mode domain (220); and
changing (740) the access permission level.

6. The method of claim 5, wherein the step of changing (740) the access permission level comprises the step of deleting, after cancelling (735) the resource (200) occupancy, data displayed on a display in correspondence to the application (240) running in the secure mode domain (220).

7. The method of any preceding claim, wherein the step of determining the priority of the application (230) comprises the steps of:
displaying data corresponding to the received request on a display; and
determining, when a command for processing the request is input, the priority of the application (230).

8. The method of any preceding claim, further comprising the steps of:
determining, after the processing of the request of the application (230), whether a request of a security application (240) to be processed by the secure mode domain (220) exists;
changing (780), when the request of the security application (240) to be processed by the secure mode domain (220) exists, the access permission level of the resource (200) to allow for access by the secure mode domain (220); and
processing (780) the request of the security application (240) using the resource (200) by the secure mode domain (220).

9. An apparatus for executing an application (230) with a processor supporting a secure mode domain (220) and a non-secure mode domain (210), the apparatus comprising:
a non-secure mode controller (110) configured to
receive a request to be processed in the non-secure mode domain (210) from the application (230), and
process, when an access permission level allows for access from the secure mode domain (220) and an access permission response is received in response to a request for access to a resource (200), the request of the application (230) using the resource (200) in the non-secure mode domain (210); and
a mode switching controller (120) configured to
determine, when the access permission level allows for access only from the secure
mode domain (220), a priority of the application (230),
change the access permission level to allow for access by the non-secure mode domain (210) if the priority of the application (230) is a high priority, wherein a high priority application is an application that is needed to be processed within a period shorter than a certain threshold, and
transmit the access permission response to the non-secure mode controller (110).

10. The apparatus of claim 9, further comprising a secure mode controller (130) configured to change the access permission level of the resource (200) under the control of the mode switching controller (120), configure the access permission level of the resource (200) accessible by the secure mode domain (220), and change, after end of the use of the resource (200) by the secure mode domain (220), the access permission level to the extent accessible by the non-secure mode domain (210).

11. The apparatus of claim 10, wherein the secure mode controller (130) is configured to change, when a security application (240) needing use of the resource (200) plural times is executed, the access permission level of the resource (200) regardless of remained times of use.

12. The apparatus of claim 10 or 11, wherein the secure mode controller (130) is configured to change, when a security application (240) needing use of the resource (200) plural times is executed, the access permission level of the resource (200) after the resource (200) is used plural times by the secure mode domain (220).

13. The apparatus of claim 10, 11 or 12, wherein the secure mode controller (130) is configured to cancel, when the resource (200) is occupied by the secure mode domain (220), resource occupancy of the secure mode domain (220) and changes the access permission level.

14. The apparatus of claim 13, further comprising a display unit configured to delete data displayed on a display means in correspondence to the application (240) executed by the secure mode domain (220) after the resource use by the secure mode domain (220) is cancelled.

15. The apparatus of any of claims 9 to 14, further comprising a display unit configured to display data corresponding to the request received from the application (230) on a display means, wherein the mode switching controller (120) is configured to determine, when a command for processing the request is input, the priority of the application (230).

16. The apparatus of any of claims 9 to 15, further comprising a secure mode controller (130) configured to change the access permission level of the resource (200) under the control of the mode switching controller (120), wherein the mode switching controller (120) is configured to determine, when a processing result of the request of the application (230) is received from the non-secure mode controller (110), whether a request of a security application (240) to be processed by the secure mode domain (220) exists and send the request of the security application (240) to the secure mode controller (130), and wherein the secure mode controller (130) is configured to change the access permission level of the resource (200) to allow for access by the secure mode domain (220) and process the request of the secure application (240) using the resource (200) by the secure mode domain (220).

17. The apparatus of any of claims 9-16, wherein the resource (200) comprises an input unit for receiving a touch input.

## Patentansprüche

1. Verfahren zum Ausführen einer Applikation (230) mit einem Prozessor, der einen Bereich mit abgesichertem Modus (220) und einen Bereich mit nicht abgesichertem Modus (210) unterstützt, wobei das Verfahren die folgenden Schritte umfasst:
Empfangen (525, 725) einer Anforderung für eine Verarbeitung in dem Bereich mit nicht abgesichertem Modus (210) von der Applikation (230);
Bestimmen (530, 730) einer an eine Ressource (200) konfigurierten Zugriffsberechtigungsstufe, die zur Verarbeitung der Anforderung verwendet wird;
Bestimmen einer Priorität der Applikation (230), wenn die Zugriffsberechtigungsstufe ausschließlich den Zugriff aus dem Bereich mit abgesichertem Modus (220) erlaubt;
Anpassen (545, 740) der Zugriffsberechtigungsstufe, so dass diese einen Zugriff durch den Bereich mit nicht abgesichertem Modus (210) erlaubt, wenn die Priorität der Applikation (230) eine hohe Priorität ist, wobei eine Applikation mit hoher Priorität eine Applikation ist, die innerhalb eines kürzeren Zeitraums als ein bestimmter Grenzwert verarbeitet werden muss; und
Verarbeiten (560, 565, 755, 760) der Anforderung der Applikation (230) unter Verwendung der Ressource (200) in dem Bereich mit nicht abgesichertem Modus (210).

2. Verfahren nach Anspruch 1, wobei der Schritt des Anpassens (545) der Zugriffsberechtigungsstufe die folgenden Schritte umfasst:
wenn die Ressource (200) durch den Bereich mit abgesichertem Modus (220) belegt ist, Warten, bis die Ressourcenbelegung des Bereichs mit abgesichertem Modus (220) freigegeben wird; und
Anpassen der Zugriffsberechtigungsstufe (545).

3. Verfahren nach Anspruch 2, wobei der Schritt des Anpassens (545) der Zugriffsberechtigungsstufe, wenn eine Sicherheitsapplikation (240), welche die Verwendung der Ressource (200) mehrmals erfordert, ausgeführt wird, den Schritt des Anpassens der Zugriffsberechtigungsstufe der Ressource (200) unabhängig von der Anzahl der verbleibenden Verwendungsinstanzen umfasst.

4. Verfahren nach einem der Ansprüche 1, 2 oder 3, wobei der Schritt des Anpassens (545) der Zugriffsberechtigungsstufe, wenn eine Sicherheitsapplikation (240), welche die Verwendung der Ressource (200) mehrmals erfordert, ausgeführt wird, das Anpassen der Zugriffsberechtigungsstufe der Ressource (200) umfasst, nachdem die Ressource (200) mehrmals durch den Bereich mit abgesichertem Modus (220) verwendet worden ist.

5. Verfahren nach einem der vorstehenden Ansprüche, wobei der Schritt des Anpassens (740) der Zugriffsberechtigungsstufe die folgenden Schritte umfasst:
Aufheben (735) der Ressourcenbelegung des Bereichs mit abgesichertem Modus (220), wenn die Ressource (200) durch den Bereich mit abgesichertem Modus (220) belegt ist; und
Anpassen (740) der Zugriffsberechtigungsstufe.

6. Verfahren nach Anspruch 5, wobei der Schritt des Anpassens (740) der Zugriffsberechtigungsstufe nach dem Aufheben (735) der Belegung der Ressource (200) den Schritt des Löschens der auf einer Anzeige gemäß der in dem Bereich mit abgesichertem Modus (220) laufenden Applikation (240) angezeigten Daten umfasst.

7. Verfahren nach einem der vorstehenden Ansprüche, wobei der Schritt des Bestimmens der Priorität der Applikation (230) die folgenden Schritte umfasst:
Anzeigen von Daten auf einer Anzeige, die der empfangenen Anforderung entsprechen; und
Bestimmen der Priorität der Applikation (230), wenn ein Befehl zur Verarbeitung der Anforderung eingegeben wird.

8. Verfahren nach einem der vorstehenden Ansprüche, ferner die folgenden Schritte umfassend:
nach der Verarbeitung der Anforderung der Applikation (230), Bestimmen, ob eine Anforderung einer Sicherheitsapplikation (240) für eine Verarbeitung durch den Bereich mit abgesichertem Modus (220) existiert;
wenn die Anforderung der Sicherheitsapplikation (240) für eine Verarbeitung durch den Bereich mit abgesichertem Modus (220) existiert, Anpassen (780) der Zugriffsberechtigungsstufe der Ressource (200), um den Zugriff durch den Bereich mit abgesichertem Modus (220) zu erlauben; und
Verarbeiten (780) der Anforderung der Sicherheitsapplikation (240) unter Verwendung der Ressource (200) durch den Bereich mit abgesichertem Modus (220).

9. Vorrichtung zum Ausführen einer Applikation (230) mit einem Prozessor, der einen Bereich mit abgesichertem Modus (220) und einen Bereich mit nicht abgesichertem Modus (210) unterstützt, wobei die Vorrichtung folgendes umfasst:
einen Controller (110) für den nicht abgesicherten Modus, der für folgende Zwecke gestaltet ist:
Empfangen einer Anforderung für eine Verarbeitung in dem Bereich mit nicht abgesichertem Modus (210) von der Applikation (230); und
wenn eine Zugriffsberechtigungsstufe den Zugriff aus dem Bereich mit abgesichertem Modus (220) erlaubt und eine Zugriffsberechtigungsantwort als Reaktion auf eine Anforderung eines Zugriffs auf eine Ressource (200) empfangen wird, Verarbeiten der Anforderung von der Applikation (230) unter Verwendung der Ressource (200) in dem Bereich mit nicht abgesichertem Modus (210); und
einen Controller (120) für einen Moduswechsel, der für folgende Zwecke gestaltet ist:
Bestimmen einer Priorität der Applikation (230), wenn die Zugriffsberechtigungsstufe ausschließlich den Zugriff aus dem Bereich mit abgesichertem Modus (220) erlaubt;
Anpassen der Zugriffsberechtigungsstufe, so dass diese einen Zugriff durch den Bereich mit nicht abgesichertem Modus (210) erlaubt, wenn die Priorität der Applikation (230) eine hohe Priorität ist, wobei eine Applikation mit hoher Priorität eine Applikation ist, die innerhalb eines kürzeren Zeitraums als ein bestimmter Grenzwert verarbeitet werden muss; und
Übermitteln der Zugriffsberechtigungsantwort an den Controller (110) für den nicht abgesicherten Modus.

10. Vorrichtung nach Anspruch 9, ferner umfassend einen Controller (130) für den abgesicherten Modus, der so gestaltet ist, dass er die Zugriffsberechtigungsstufe der Ressource (200) gesteuert durch den Controller (120) für einen Moduswechsel anpasst, die Zugriffsberechtigungsstufe der Ressource (200), für die ein Zugriff durch den Bereich mit abgesichertem Modus (220) möglich ist, konfiguriert und die Zugriffsberechtigungsstufe nach Beendigung der Verwendung der Ressource (200) durch den Bereich mit abgesichertem Modus (220) auf die Zugriffsberechtigung durch den Bereich mit nicht abgesichertem Modus (210) anpasst.

11. Vorrichtung nach Anspruch 10, wobei der Controller (130) für den abgesicherten Modus so gestaltet ist, dass er, wenn eine Sicherheitsapplikation (240), welche die Verwendung der Ressource (200) mehrmals benötigt, ausgeführt wird, die Zugriffsberechtigungsstufe der Ressource (200) unabhängig von der Anzahl der verbleibenden Verwendungsinstanzen anpasst.

12. Vorrichtung nach Anspruch 10 oder 11, wobei der Controller (130) für den abgesicherten Modus so gestaltet ist, dass er, wenn eine Sicherheitsapplikation (240), welche die Verwendung der Ressource (200) mehrmals benötigt, ausgeführt wird, die Zugriffsberechtigungsstufe der Ressource (200) anpasst, nachdem die Ressource (200) durch den Bereich mit abgesichertem Modus (220) mehrmals verwendet worden ist.

13. Vorrichtung nach Anspruch 10, 11 oder 12, wobei der Controller (130) für den abgesicherten Modus so gestaltet ist, dass er die Ressourcenbelegung des Bereichs mit abgesichertem Modus (220) aufhebt, wenn die Ressource (200) durch den Bereich mit abgesichertem Modus (220) belegt ist, und die Zugriffsberechtigungsstufe anpasst.

14. Vorrichtung nach Anspruch 13, ferner umfassend eine Anzeigeeinheit, die so gestaltet ist, dass sie auf einer Anzeigeeinrichtung angezeigte Daten gemäß der durch den Bereich mit abgesichertem Modus (220) ausgeführten Applikation (240) löscht, nachdem die Verwendung der Ressource durch den Bereich mit abgesichertem Modus (220) aufgehoben worden ist.

15. Vorrichtung nach einem der Ansprüche 9 bis 14, ferner umfassend eine Anzeigeeinheit, die so gestaltet ist, dass sie Daten auf einer Anzeigeeinrichtung anzeigt, die der von der Applikation (230) empfangenen Anforderung empfangen werden, wobei der Controller (120) für einen Moduswechsel so gestaltet ist, dass er die Priorität der Applikation (230) bestimmt, wenn ein Befehl zur Verarbeitung der Anforderung eingegeben wird.

16. Vorrichtung nach einem der Ansprüche 9 bis 15, ferner umfassend einen Controller (130) für den abgesicherten Modus, der so gestaltet ist, dass er die Zugriffsberechtigungsstufe der Ressource (200) gesteuert durch den Controller (120) für einen Moduswechsel anpasst, wobei der Controller (120) für einen Moduswechsel so gestaltet ist, dass er, wenn ein Verarbeitungsergebnis der Anforderung der Applikation (230) von dem Controller (110) für den nicht abgesicherten Modus empfangen wird, bestimmt, ob eine Anforderung einer Sicherheitsapplikation (240) für eine Verarbeitung durch den Bereich mit abgesichertem Modus (220) existiert, und die Anforderung der Sicherheitsapplikation (240) an den Controller (130) für den abgesicherten Modus sendet, und wobei der Controller (130) für den abgesicherten Modus so gestaltet ist, dass er die Zugriffsberechtigungsstufe der Ressource (200) so anpasst, dass ein Zugriff durch den Bereich mit abgesichertem Modus (220) erlaubt wird, und die Anforderung der Sicherheitsapplikation (240) verarbeitet, welche die Ressource (200) durch den Bereich mit abgesichertem Modus (220) verwendet.

17. Vorrichtung nach einem der Ansprüche 9 bis 16, wobei die Ressource (200) eine Eingabeeinheit zum Empfang einer Berührungseingabe umfasst.

## Revendications

1. Procédé d'exécution d'une application (230) avec un processeur supportant un domaine en mode sécurisé (220) et un domaine en mode non sécurisé (210), le procédé comprenant les étapes consistant à :
recevoir (525, 725) de l'application (230) une demande à traiter dans le domaine en mode non sécurisé (210) ;
déterminer (530, 730) un niveau de permission d'accès configuré à une ressource (200) utilisée pour traiter la demande ;
déterminer, lorsque le niveau de permission d'accès permet l'accès uniquement à partir du domaine en mode sécurisé (220), une priorité de l'application (230) ;
modifier (545, 740) le niveau de permission d'accès pour permettre l'accès par le domaine en mode non sécurisé (210) si la priorité de l'application (230) est une priorité élevée, une application à priorité haute étant une application qui doit être traitée dans un délai plus court qu'un certain seuil ; et
traiter (560, 565, 755, 760) la demande de l'application (230) utilisant la ressource (200) dans le domaine en mode non sécurisé (210).

2. Procédé selon la revendication 1, la modification (545) du niveau de permission d'accès comprenant les étapes consistant à :
attendre, lorsque la ressource (200) est occupée par le domaine en mode sécurisé (220), jusqu'à ce que l'occupation de la ressource du domaine en mode sécurisé (220) soit libérée ; et
modifier le niveau d'autorisation d'accès (545).

3. Procédé selon la revendication 2, la modification (545) du niveau de permission d'accès comprenant l'étape consistant à modifier, lorsqu'une application de sécurité (240) nécessitant l'utilisation de la ressource (200) plusieurs fois est exécutée, le niveau de permission d'accès de la ressource (200) indépendamment d'un nombre de fois d'utilisation restant.

4. Procédé selon la revendication 1, 2 ou 3, la modification (545) du niveau de permission d'accès comprenant l'étape consistant à modifier, lorsqu'une application de sécurité (240) nécessitant l'utilisation de la ressource (200) plusieurs fois est exécutée, le niveau de permission d'accès de la ressource (200) après que la ressource (200) est utilisée plusieurs fois par le domaine en mode sécurisé (220).

5. Procédé selon l'une quelconque des revendications précédentes, la modification (740) du niveau de permission d'accès comprenant les étapes consistant à :
annuler (735), lorsque la ressource (200) est occupée par le domaine en mode sécurisé (220), l'occupation de la ressource du domaine en mode sécurisé (220) ; et
modifier (740) le niveau d'autorisation d'accès.

6. Procédé selon la revendication 5, la modification (740) du niveau d'autorisation d'accès comprenant l'étape consistant à supprimer, après annulation (735) de l'occupation de la ressource (200), les données affichées sur un écran correspondant à l'application (240) exécutée dans le domaine en mode sécurisé (220).

7. Procédé selon l'une quelconque des revendications précédentes, la détermination de la priorité de l'application (230) comprenant les étapes consistant à :
afficher sur un écran les données correspondant à la demande reçue ; et
déterminer, lorsqu'une commande de traitement de la demande est saisie, la priorité de l'application (230).

8. Procédé selon l'une quelconque des revendications précédentes, comprenant en outre les étapes consistant à :
déterminer, après le traitement de la demande de l'application (230), s'il existe une demande d'une application de sécurité (240) à traiter par le domaine en mode sécurisé (220) ;
modifier (780), lorsque la demande de l'application de sécurité (240) à traiter par le domaine en mode sécurisé (220) existe, le niveau d'autorisation d'accès de la ressource (200) pour permettre l'accès par le domaine en mode sécurisé (220) ; et
traiter (780) la demande de l'application de sécurité (240) utilisant la ressource (200) par le domaine en mode sécurisé (220).

9. Appareil pour exécuter une application (230) avec un processeur supportant un domaine en mode sécurisé (220) et un domaine en mode non sécurisé (210), l'appareil comprenant :
un dispositif de commande de mode non sécurisé (110) conçu pour
recevoir de l'application (230) une demande à traiter dans le domaine en mode non sécurisé (210), et
traiter, lorsqu'un niveau de permission d'accès permet l'accès à partir du domaine en mode sécurisé (220) et qu'une réponse de permission d'accès est reçue en réponse à une demande d'accès à une ressource (200), la demande de l'application (230) utilisant la ressource (200) dans le domaine en mode non sécurisé (210) ; et
un dispositif de commande de commutation de mode (120) conçu pour
déterminer, lorsque le niveau de permission d'accès permet l'accès uniquement à partir du domaine en mode sécurisé (220), une priorité de l'application (230),
modifier le niveau de permission d'accès pour permettre l'accès par le domaine en mode non sécurisé (210) si la priorité de l'application (230) est une priorité élevée, une application à priorité élevée étant une application qui doit être traitée dans un délai plus court qu'un certain seuil, et
transmettre la réponse d'autorisation d'accès au dispositif de commande de mode non sécurisé (110).

10. Appareil selon la revendication 9, comprenant en outre un dispositif de commande de mode sécurisé (130) conçu pour modifier le niveau de permission d'accès de la ressource (200) sous le contrôle du dispositif de commande de commutation de mode (120), configurer le niveau de permission d'accès de la ressource (200) accessible par le domaine en mode sécurisé (220), et modifier, après la fin de l'utilisation de la ressource (200) par le domaine en mode sécurisé (220), le niveau de permission d'accès dans la mesure accessible par le domaine en mode non sécurisé (210).

11. Appareil selon la revendication 10, le dispositif de commande de mode sécurisé (130) étant conçu pour modifier, lorsqu'une application de sécurité (240) nécessitant l'utilisation de la ressource (200) plusieurs fois est exécutée, le niveau de permission d'accès de la ressource (200) indépendamment des temps d'utilisation restants.

12. Appareil selon la revendication 10 ou 11, le dispositif de commande de mode sécurisé (130) étant conçu pour modifier, lorsqu'une application de sécurité (240) nécessitant l'utilisation de la ressource (200) plusieurs fois est exécutée, le niveau de permission d'accès de la ressource (200) après que la ressource (200) est utilisée plusieurs fois par le domaine en mode sécurisé (220).

13. Appareil selon la revendication 10, 11 ou 12, le dispositif de commande de mode sécurisé (130) étant conçu pour annuler, lorsque la ressource (200) est occupée par le domaine en mode sécurisé (220), l'occupation de la ressource du domaine en mode sécurisé (220) et modifier le niveau de permission d'accès.

14. Appareil selon la revendication 13, comprenant en outre une unité d'affichage conçue pour supprimer des données affichées sur un moyen d'affichage correspondant à l'application (240) exécutée par le domaine en mode sécurisé (220) après que l'utilisation de la ressource par le domaine en mode sécurisé (220) est annulée.

15. Appareil selon l'une quelconque des revendications 9 à 14, comprenant en outre une unité d'affichage conçue pour afficher des données correspondant à la demande reçue de l'application (230) sur un moyen d'affichage, le dispositif de commande de commutation de mode (120) étant conçu pour déterminer, lorsqu'une commande de traitement de la demande est entrée, la priorité de l'application (230).

16. Appareil selon l'une quelconque des revendications 9 à 15, comprenant en outre un dispositif de commande de mode sécurisé (130) conçu pour modifier le niveau de permission d'accès de la ressource (200) sous le contrôle du dispositif de commande de commutation de mode (120), le dispositif de commande de commutation de mode (120) étant conçu pour déterminer, lorsqu'un résultat de traitement de la demande de l'application (230) est reçu du dispositif de commande de mode non sécurisé (110), si une demande d'une application de sécurité (240) devant être traitée par le domaine en mode sécurisé (220) existe et envoyer la demande de l'application de sécurité (240) au dispositif de commande de mode sécurisé (130), et le dispositif de commande de mode sécurisé (130) étant conçu pour modifier le niveau d'autorisation d'accès de la ressource (200) pour permettre l'accès par le domaine de mode sécurisé (220) et traiter la demande de l'application sécurisée (240) utilisant la ressource (200) par le domaine de mode sécurisé (220).

17. Appareil selon l'une quelconque des revendications 9 à 16, la ressource (200) comprenant une unité d'entrée pour recevoir une entrée tactile.
